# EUROPÄISCHE PATENTANMELDUNG

(11) **EP 0 837 068 A2**
(43) Veröffentlichungstag der Anmeldung: **22.04.1998**
(21) Anmeldenummer: 97117277.0
(22) Anmeldetag: 06.10.1997
(51) Int. Cl.: C07F 17/00, C08F 10/00

(54) **Stereorigide Metallocenverbindung**

(30) Priorität: 15.10.1996 DE 19642432; 06.05.1997 DE 19719104
(71) Anmelder: TARGOR GmbH, 55116 Mainz (DE)
(72) Erfinder: Göres, Markus, Dr., 65760 Eschborn (DE); Küber, Frank, Dr., 61440 Oberursel (DE); Schiemenz, Berthold, Dr., 65929 Frankfurt (DE)

(57) **Zusammenfassung**

Die vorliegende Erfindung betrifft eine stereorigide Metallocenverbindung, die als Liganden mindestens zwei substituierte oder unsubstituierte Cyclopentadienylgruppen aufweist, die über einen Fünfring miteinander verbunden sind, wobei mindestens eine Cyclopentadienylgruppe an den Fünfring anelliert ist und das Ligandsystem der stereorigiden Metallocenverbindung von 4-[η⁵-3'-alkyl-cyclopentadienyl)-4,6,6-trimethyl-(η⁵-2-alkyl-4,5-tetrahydropentalen] verschieden ist. Die erfindungsgemäße Metallocenverbindung eignet sich als Katalysatorkomponente für die Olefinpolymerisation.

## Beschreibung

Die vorliegende Erfindung betrifft eine spezielle stereorigide Metallocenverbindung sowie ein Verfahren zur Herstellung von Polyolefinen in Gegenwart dieser speziellen stereorigiden Metallocenverbindung.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt (EP 129 368, EP 351 392).

Im Tagungsband der 1st Journal of Organometallic Chemistry Conference on Applied Organometallic Chemistry, Seite 136 werden Metallocene beschrieben, welche einen substituierten tricyclischen Kohlenwasserstoff als Ligandsystem aufweisen.

Bei Einsatz löslicher Metallocenverbindungen auf der Basis von Bis(cyclopentadienyl)zirkon-dialkyl bzw. -dihalogenid in Kombination mit oligomeren Aluminoxanen erhält man ataktische Polymere, die wegen ihrer unausgewogenen und ungenügenden Produkteigenschaften technisch nur von geringer Bedeutung sind. Außerdem sind bestimmte Olefincopolymere nicht zugänglich.

Derivate des Zirkonocendichlorids, in denen die beiden substituierten Cyclopentadienylgruppen über eine Methylen-, Ethylen- oder eine Dimethylsilylenbrücke miteinander verbunden sind, können aufgrund ihrer konformativen Starrheit als Katalysatoren zur isospezifischen Polymerisation von Olefinen benutzt werden (Chem. Lett. 1989, S. 1853 bis 1856 oder EP-A 0 316 155). Besondere Bedeutung besitzen Metallocene mit (substituierten) Indenylresten als Liganden zur Herstellung hochisotaktischer Polymere mit hoher Kristallinität und hohem Schmelzpunkt (EP 485 823, EP 530 647).

Von großem Interesse sind auch Polyolefine, die in ihrem Eigenschaftsprofil zwischen diesen beiden Extremen liegen.

Es bestand die Aufgabe, eine Metallocenverbindung zur Verfügung zu stellen, welche die Nachteile des Standes der Technik vermeidet und sich zur Herstellung von Polyolefinen eignet.

Die vorliegende Erfindung betrifft somit eine stereorigide Metallocenverbindung der Formel I 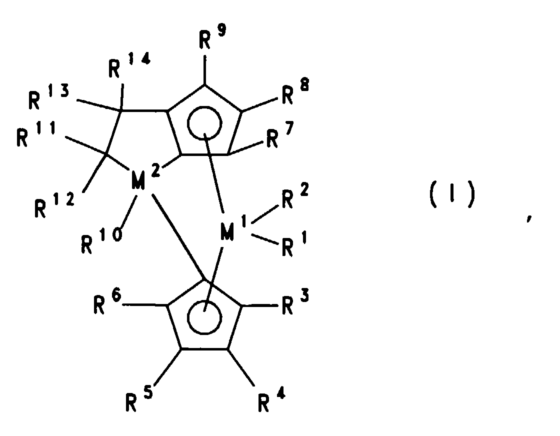 worin
M¹ ein Metall der Gruppe IIIb, IVb, Vb oder VIb des Periodensystems ist,
M² Kohlenstoff, Silizium oder Germanium ist,
R¹ und R² gleich oder verschieden sind und ein Wasserstoffatom, eine C₁-C₄₀-kohlenstoffhaltige Gruppe wie eine C₁-C₁₀-Alkyl-, eine C₁-C₁₀-Alkoxy, eine C₆-C₁₀-Aryl-, eine C₆-C₂₅-Aryloxy-, eine C₂-C₁₀-Alkenyl-, eine C₇-C₄₀-Arylalkyl- oder eine C₇-C₄₀-Arylalkenylgruppe, eine OH-Gruppe, ein Halogenatom oder NR¹⁵₂, worin R¹⁵ ein Halogenatom, eine C₁-C₁₀-Alkylgruppe oder eine C₆-C₁₀-Arylgruppe ist, bedeuten, oder R¹ und R² zusammen mit den sie verbindenden Atomen ein Ringsystem bilden,
R³, R⁴, R⁵, R⁶, R⁷, R⁸ und R⁹ gleich oder verschieden sind und ein Wasserstoffatom, ein Halogenatom, eine C₁-C₄₀-kohlenstoffhaltige Gruppe wie eine C₁-C₁₀-Alkylgruppe, die halogeniert sein kann, eine C₆-C₃₀-Arylgruppe, die halogeniert sein kann, eine C₆-C₂₀-Aryloxy-, eine C₂-C₁₂-Alkenyl-, eine C₇-C₄₀-Arylalkyl-, eine C₇-C₄₀-Alkylaryl-, oder eine C₈-C₄₀-Arylalkenylgruppe, einen SiR¹⁵₃-, -NR¹⁵₂-, -SiOR¹⁵₃-, -SiSR¹⁵₃- oder -PR¹⁵₂-Rest bedeuten, worin R¹⁵ gleich oder verschieden ein Halogenatom, eine C₁-C₁₀-Alkylgruppe oder eine C₆-C₁₀-Arylgruppe sind oder ein Ringsystem bilden, oder zwei oder mehr benachbarte Reste R³, R⁴, R⁵, R⁶, R⁷, R⁸ und R⁹ zusammen mit den sie verbindenen Atomen ein Ringsystem bilden, welches bevorzugt 4 bis 40, besonders bevorzugt 6 bis 20 Kohlenstoffatome enthält,
R¹⁰, R¹³ und R¹⁴ gleich oder verschieden, bevorzugt gleich sind, und eine C₁-C₂₀-Alkylgruppe bedeuten,
R¹¹ und R¹² gleich oder verschieden sind, und ein Wasserstoffatom, eine C₁-C₄₀-kohlenstoffhaltige Gruppe wie eine C₁-C₂₀-Alkyl-, eine C₁-C₁₀-Alkoxy-, eine C₆-C₂₀-Aryl-, eine C₂-C₁₂-Alkenyl-, ein C₇-C₄₀-Arylalkyl-, eine C₇-C₄₀-Alkylaryl-, oder eine C₈-C₄₀-Arylalkenylgruppe bedeutet, die jeweils Reste wie ein Halogenatom, -NR¹⁵₃, -SR¹⁵₂, -SiR¹⁵₃ oder -OSiR¹⁵₃ tragen können, worin R¹⁵ ein Halogenatom, eine C₁-C₁₀ Alkylgruppe oder eine C₆-C₁₀ Arylgruppe ist,
   und das Ligandsystem der Verbindung der Formel I verschieden ist von 4-[η⁵-3'-alkyl-cyclopentadienyl)-4,6,6-trimethyl-(η⁵-2-alkyl-4,5-tetrahydropentalen)].
Für den Fall, daß M² Kohlenstoff ist und R¹⁰, R¹³ und R¹⁴ Methyl sind, ist es bevorzugt, daß mindestens einer der Reste R³, R⁵, R⁶, R⁷ und R⁹ von Wasserstoff verschieden ist und/oder R⁸ Wasserstoff ist.
Die C₁-C₂₀-Alkylgruppen R¹⁰, R¹³ und R¹⁴ können unverzweigt oder auch verzweigt sein.

Für Verbindungen der Formel I gilt bevorzugt, daß
M¹ ein Metall der Gruppe IVb des Periodensystems der Elemente wie Titan, Zirkonium oder Hafnium, insbesondere Zirkonium ist,
R¹ und R² gleich sind und eine C₁-C₄-Alkylgruppe oder ein Halogenatom wie Fluor, Chlor, Brom oder Jod, insbesondere Chlor bedeuten,
R³, R⁴, R⁵, R⁶, R⁷, R⁸ und R⁹ gleich oder verschieden sind und ein Wasserstoffatom, eine C₁-C₁₀-Alkylgruppe oder eine C₆-C₂₄-Arylgruppe sind, oder zwei oder mehr benachbarte Reste R³, R⁴, R⁵, R⁶, R⁷, R⁸ und R⁹ zusammen mit den sie verbindenden Atomen ein aromatisches oder aliphatisches kohlenstoffhaltiges Ringsystem mit 4 bis 20 Kohlenstoffatomen bilden,
R¹⁰, R¹³ und R¹⁴ eine C₁-C₁₀-Alkylgruppe, insbesondere C₁-C₆-Alkylgruppe sind,
M² Kohlenstoff ist,
R¹¹ und R¹² gleich oder verschieden sind, und R¹¹ ein Wasserstoffatom, eine C₁-C₁₀-kohlenstoffhaltige Gruppe, insbesondere eine C₁-C₄-Alkylgruppe oder eine C₆-C₁₀-Arylgruppe und R¹² ein Wasserstoffatom sind und
   mindestens einer der Reste R³, R⁵, R⁶, R⁷ und R⁹ von Wasserstoff verschieden ist und/oder R⁸ Wasserstoff ist.

Besonders bevorzugt sind Verbindungen der Formel I, worin
M¹ Zirkonium ist,
R¹ und R² gleich sind und ein Halogenatom, insbesondere Chlor bedeuten,
R³, R⁴, R⁵, R⁶, R⁷ und R⁹ gleich oder verschieden sind und ein Wasserstoffatom oder eine C₁-C₄-Alkylgruppe wie Methyl, Ethyl, Propyl, lsopropyl, Butyl, tert.-Butyl oder Isobutyl oder eine C₆-C₁₄-Arylgruppe wie Phenyl oder Naphtyl bedeuten, oder R³ und R⁴ und/oder R⁵ und R⁶ zusammen mit den sie verbindenden Atomen ein aromatisches Kohlenwasserstoffringsystem mit 4 bis 20 Kohlenstoffatomen bilden, insbesondere einen Sechsring, der seinerseits substituiert sein kann,
R⁸ ein Wasserstoffatom ist,
M² ein Kohlenstoffatom ist,
R¹⁰, R¹³ und R¹⁴ eine C₁-C₆-Alkylgruppe wie Methyl, Ethyl, Propyl, Isopropyl, Butyl, Isobutyl, tert.-Butyl, oder Hexyl, insbesondere Methyl sind,
R¹¹ und R¹² gleich sind und ein Wasserstoffatom bedeuten.

Beispiele für erfindungsgemäße Metallocenverbindungen sind:
[4-(η⁵-Cyclopentadienyl)-4,6,6-trimethyl-(η⁵-4,5-tetrahydropentalen)]-dichlorotitan
[4-(η⁵-Cyclopentadienyl)-4,6,6-trimethyl-(η⁵-4,5-tetrahydropentalen)]-dichlorozirconium
[4-(η⁵-Cyclopentadienyl)-4,6,6-trimethyl-(η⁵-4,5-tetrahydropentalen)]-dichlorohafnium
[4-(η⁵-3*'*-Methyl-cyclopentadienyl)-4,6,6-trimethyl-[η⁵-4,5-tetrahydropentalen)]-dichlorozirconium
[4-(η⁵-3*'*-Ethyl-cyclopentadienyl)-4,6,6-trimethyl-(η⁵-4,5-tetrahydropentalen)]-dichlorozirconium
[4-(η⁵-3*'*-Isopropyl-cyclopentadienyl)-4,6,6-trimethyl-(η⁵-4,5-tetrahydropentalen)]-dichlorozirconium
[4-(η⁵-3*'*-Isobutyl-cyclopentadienyl)-4,6,6-trimethyl-(η⁵-4,5-tetrahydropentalen)]-dichlorozirconium
[4-(η⁵-3*'*-Cyclohexyl -cyclopentadienyl)-4,6,6-trimethyl-(η⁵-4,5-tetrahydropentalen)]-dichlorozirconium
[4-(η⁵-3*'*-tert.-Butyl-cyclopentadienyl)-4,6,6-trimethyl-(η⁵-4,5-tetrahydropentalen)]-dichlorozirconium
[4-(η⁵-3*'*-Benzyl -cyclopentadienyl)-4,6,6-trimethyl-(η⁵-4,5-tetrahydropentalen)]-dichlorozirconium
[4-(η⁵-3*'*-Phenyl-cyclopentadienyl)-4,6,6-trimethyl-(η⁵-4,5-tetrahydropentalen)-dichlorozirconium
[4-(η⁵-3*'*-Trimethylsilyl-cyclopentadienyl)-4,6,6-trimethyl-(η⁵-4,5-tetrahydropentalen)]-dichlorozirconium
[4-(η⁵-3*'*-Methyl-5*'*-methyl-cyclopentadienyl)-4,6,6-trimethyl-(η⁵-4,5-tetrahydropentalen)]-dichlorozirconium
[4-(η⁵-3*'*-Ethyl-5*'*-methyl-cyclopentadienyl)-4,6,6-trimethyl-(η⁵-4,5-tetrahydropentalen)]-dichlorozirconium
[4-(η⁵-3*'*-Isopropyl-5*'*-methyl-cyclopentadienyl)-4,6,6-trimethyl-(η⁵-4,5-tetrahydropentalen)]-dichlorozirconium
[4-(η⁵-3*'*-tert.-Butyl-5*'*-methyl-cyclopentadienyl)-4,6,6-trimethyl-(η⁵-4,5-tetrahydropentalen)]-dichlorozirconium
[4-(η⁵-3*'*-Benzyl-5*'*-methyl-cyclopentadienyl)-4,6,6-trimethyl-(η⁵-4,5-tetrahydropentalen)]-dichlorozirconium
[4-(η⁵-3*'*-Phenyl-5*'*-methyl-cyclopentadienyl)-4,6,6-trimethyl-(η⁵-4,5-tetrahydropentalen)]-dichlorozirconium
[4-(η⁵-3*'*-Methyl-5*'*-ethyl-cyclopentadienyl)-4,6,6-trimethyl-(η⁵-4,5-tetrahydropentalen)]-dichlorozirconium
[4-(η⁵-3*'*-Ethyl-5*'*-ethyl-cyclopentadienyl)-4,6,6-trimethyl-(η⁵-4,5-tetrahydropentalen)]-dichlorozirconium
[4-(η⁵-3*'-*Isopropyl-5*'*-ethyl-cyclopentadienyl)-4,6,6-trimethyl-(η⁵-4,5-tetrahydropentalen)]-dichlorozirconium
[4-(η⁵-3*'*-tert.-Butyl-5*'*-ethyl-cyclopentadienyl)-4,6,6-trimethyl-(η⁵-4,5-tetrahydropentalen)]-dichlorozirconium
[4-(η⁵-3*'*-Benzyl-5*'*-ethyl-cyclopentadienyl)-4,6,6-trimethyl-(η⁵-4,5-tetrahydropentalen)]-dichlorozirconium
[4-(η⁵-3*'*-Phenyl-5*'*-ethyl-cyclopentadienyl)-4,6,6-trimethyl-(η⁵-4,5-tetrahydropentalen)]-dichlorozirconium
[4-(η⁵-3*'*-Methyl-5*'*-isopropyl-cyclopentadienyl)-4,6,6-trimethyl-(η⁵-4,5-tetrahydropentalen)]-dichlorozirconium
[4-(η⁵-3*'*-Ethyl-5*'*-isopropyl-cyclopentadienyl)-4,6,6-trimethyl-(η⁵-4,5-tetrahydropentalen)]-dichlorozirconium
[4-(η⁵-3*'*-Isopropyl-5*'*-isopropyl-cyclopentadienyl)-4,6,6-trimethyl-(η⁵-4,5-tetrahydro-pentalen)]-dichlorozirconium
[4-(η⁵-3*'*-tert.-Butyl-5*'*-isopropyl-cyclopentadienyl)-4,6,6-trimethyl-(η⁵-4,5-tetrahydropentalen)]-dichlorozirconium
[4-(η⁵-3*'*Benzyl-5*'*-isopropyl-cyclopentadienyl)-4,6,6-trimethyl-(η⁵-4,5-tetrahydropentalen)]-dichlorozirconium
[4-(η⁵-3*'*-Phenyl-5*'*-isopropyl-cyclopentadienyl)-4,6,6-trimethyl-(η⁵-4,5-tetrahydropentalen)]-dichlorozirconium
[4-(η⁵-Cyclopentadienyl)-4,6,6-triethyl-(η⁵-4,5-tetrahydropentalen)]-dichlorozirconium
[4-(η⁵-3*'*-Methyl-cyclopentadienyl)-4,6,6-triethyl-(η⁵-4,5-tetrahydropentalen)]-dichlorozirconium
[4-(η⁵-3*'*-Ethyl-cyclopentadienyl)-4,6,6-triethyl-(η⁵-4,5-tetrahydropentalen)]-dichlorozirconium
[4-(η⁵-3*'*-Isopropyl-cyclopentadienyl)-4,6,6-triethyl-(η⁵-4,5-tetrahydropentalen)]-dichlorozirconium
[4-(η⁵-3*'*-Isobutyl-cyclopentadienyl)-4,6,6-triethyl-(η⁵-4,5-tetrahydropentalen)]-dichlorozirconium
[4-(η⁵-3*'*-Cyclohexyl-cyclopentadienyl)-4,6,6-triethyl-(η⁵-4,5-tetrahydropentalen)]-dichlorozirconium
[4-(η⁵-3*'*-tert.-Butyl-cyclopentadienyl)-4,6,6-triethyl-(η⁵-4,5-tetrahydropentalen)]-dichlorozirconium
[4-(η⁵-3*'*-Benzyl-cyclopentadienyl)-4,6,6-triethyl-(η⁵-4,5-tetrahydropentalen)]-dichlorozirconium
[4-(η⁵-3*'*-Phenyl-cyclopentadienyl)-4,6,6-triethyl-(η⁵-4,5-tetrahydropentalen)]-dichlorozirconium
[4-(η⁵-Cyclopentadienyl)-4-methyl-6,6-diethyl-(η⁵-4,5-tetrahydropentalen)]-dichlorozirconium
[4-(η⁵-3^{*'*}-Methyl-cyclopentadienyl)-4-methyl-6,6-diethyl-(η⁵-4,5-tetrahydropentalen)]-dichlorozirconium
[4-(η⁵-3*'*-Ethyl-cyclopentadienyl)-4-methyl-6,6-diethyl-(η⁵-4,5-tetrahydropentalen)]-dichlorozirconium
[4-(η⁵-3*'*-Isopropyl-cyclopentadienyl)-4-methyl-6,6-diethyl-(η⁵-4,5-tetrahydropentalen)]-dichlorozirconium
[4-(η⁵-3*'*-Benzyl-cyclopentadienyl)-4-methyl-6,6-diethyl-(η⁵-4,5-tetrahydropentalen)]-dichlorozirconium
[4-(η⁵-3*'*-Phenyl-cyclopentadienyl)-4-methyl-6,6-diethyl-(η⁵-4,5-tetrahydropentalen)]-dichlorozirconium
[4-(η⁵-Cyclopentadienyl)-4-ethyl-6,6-dimethyl-(η⁵-4,5-tetrahydropentalen)]-dichlorozirconium
[4-(η⁵-3*'*-Methyl-cyclopentadienyl)-4-ethyl-6,6-dimethyl-(η⁵-4,5-tetrahydropentalen)]-dichlorozirconium
[4-(η⁵-3*'*-Ethyl-cyclopentadienyl)-4-ethyl-6,6-dimethyl-(η⁵-4,5-tetrahydropentalen)]-dichlorozirconium
[4-(η⁵-3*'*-Isopropyl-cyclopentadienyl)-4-ethyl-6,6-dimethyl-(η⁵-4,5-tetrahydropentalen)]-dichlorozirconium
[4-(η⁵-3*'*-Benzyl-cyclopentadienyl)-4-ethyl-6,6-dimethyl-(η⁵-4,5-tetrahydropentalen)]-dichlorozirconium
[4-(η⁵-3*'*-Phenyl-cyclopentadienyl)-4-ethyl-6,6-dimethyl-(η⁵-4,5-tetrahydropentalen)]-dichlorozirconium
[4-(η⁵-Cyclopentadienyl)-4-methyl-6-ethyl-6-methyl-(η⁵-4,5-tetrahydropentalen)]-dichlorozirconium
[4-(η⁵-3*'*-Methyl-cyclopentadienyl)-4-methyl-6-ethyl-6-methyl-(η⁵-4,5-tetrahydropentalen)]-dichlorozirconium
[4-(η⁵-3*'*-Ethyl-cyclopentadienyl)-4-methyl-6-ethyl-6-methyl-(η⁵-4,5-tetrahydropentalen)]-dichlorozirconium
[4-(η⁵-3*'*-Isopropyl-cyclopentadienyl)-4-methyl-6-ethyl-6-methyl-(η⁵-4,5-tetrahydropentalen)]-dichlorozirconium
4-(η⁵-3*'*-Benzyl-cyclopentadienyl)-4-methyl-6-ethyl-6-methyl-(η⁵-4,5-tetrahydropentalen)]-dichlorozirconium
4-(η⁵-3*'*-Phenyl-cyclopentadienyl)-4-methyl-6-ethyl-6-methyl-(η⁵-4,5-tetrahydropentalen)]-dichlorozirconium
[4-(η⁵-Cyclopentadienyl)-4-methyl-6-isopropyl-6-methyl-(η⁵-4,5-tetrahydropentalen)]-dichlorozirconium
[4-(η⁵-3*'*-Methyl-cyclopentadienyl)-4-methyl-6-isopropyl-6-methyl-(η⁵-4,5-tetrahydropentalen)]-dichlorozirconium
[4-(η⁵-3*'*-Ethyl-cyclopentadienyl)-4-methyl-6-isopropyl-6-methyl-(η⁵-4,5-tetrahydropentalen)]-dichlorozirconium
[4-(η⁵-3*'-*Isopropyl-cyclopentadienyl)-4-methyl-6-isopropyl-6-methyl-(η⁵-4,5-tetrahydropentalen)]-dichlorozirconium
4-(η⁵-3*'*-Benzyl-cyclopentadienyl)-4-methyl-6-isopropyl-6-methyl-(η⁵-4,5-tetrahydropentalen)]-dichlorozirconium
4-(η⁵-3*'*-Phenyl-cyclopentadienyl)-4-methyl-6-isopropyl-6-methyl-(η⁵-4,5-tetrahydropentalen)]-dichlorozirconium
[4-(η⁵-3*'*-Trimethylsilyl-5*'*-ethyl-cyclopentadienyl)-4,6,6-trimethyl-(η⁵-4,5-tetrahydropentalen)]-dichlorozirconium
[4-(η⁵-3*'*-Trimethylsilyl-5*'*-isopropyl-cyclopentadienyl)-4,6,6-trimethyl-(η⁵-4,5-tetrahydropentalen)]-dichlorozirconium
[4-(η⁵-3*'*-Trimethylsilyl-cyclopentadienyl)-4,6,6-triethyl-(η⁵-4,5-tetrahydropentalen)]-dichlorozirconium
[4-(η⁵-3*'*-Trimethylsilyl-cyclopentadienyl)-4-methyl-6,6-diethyl-(η⁵-4,5-tetrahydropentalen)]-dichlorozirconium
[4-(η⁵-3*'*-Trimethylsilyl-cyclopentadienyl)-4-ethyl-6,6-dimethyl-(η⁵-4,5-tetrahydropentalen)]-dichlorozirconium
[4-(η⁵-3*'*-Trimethylsilyl-cyclopentadienyl)-4-methyl-6-ethyl-6-methyl-(η⁵-4,5-tetrahydropentalen)]-dichlorozirconium
[4-(η⁵-3*'*-Trimethylsilyl-cyclopentadienyl)-4-methyl-6-isopropyl-6-methyl-(η⁵-4,5-tetrahydropentalen)]-dichlorozirconium
[4-(η⁵-Fluorenyl)-2,4,6,6-tetramethyl-η⁵-tetrahydropentalen]-dichlorozirconium
[4-(η⁵-Fluorenyl)-2,4,6,6-tetramethyl-η⁵-tetrahydropentalen]-dichlorotitan
[4-(η⁵-Fluorenyl)- 2,4,6,6-tetramethyl-η⁵-tetrahydropentalen]-dichlorohafnium
[4-(η⁵-Fluorenyl)- 2,4,6,6-tetramethyl-η⁵-tetrahydropentalen]-bis-diethylaminozirconium
[4-(η⁵-Fluorenyl)- 2,4,6,6-tetramethyl-η⁵-tetrahydropentalen]-bis-dimethylaminozirconium
[4-(η⁵-Fluorenyl)-4,6,6-trimethyl-(2-ethyl)-η⁵-tetrahydropentalen]-dichlorozirconium
[4-(η⁵-Fluorenyl)-4,6,6-trimethyl-(2-isopropyl)-η⁵-tetrahydropentalen]-dichlorozirconium
[4-(η⁵-Fluorenyl)-4,6,6-trimethyl-(2-benzyl)-η⁵-tetrahydropentalen]-dichlorozirconium
[4-(η⁵-Fluorenyl)-4,6,6-trimethyl-(2-trimethylsiIyl)-η⁵-tetrahydropentalen]-dichlorozirconium
[4-(η⁵-Indenyl)- 2,4,6,6-teframethyl -η⁵-tetrahydropentalen]-dichlorozirconium
[4-(η⁵-Indenyl)- 2,4,6,6-tetramethyl-η⁵-tetrahydropentalen]-dichlorotitan
[4-(η⁵-Indenyl)- 2,4,6,6-tetramethyl-η⁵-tetrahydropentalen]-dichlorohafnium
[4-(η⁵-Indenyl)- 2,4,6,6-tetramethyl-η⁵-tetrahydropentalen]-bis-diethylaminozirconium
[4-(η⁵-Indenyl)-2,4,6,6-tetramethyl-η⁵-tetrahydropentalen]-bis-dimethylaminozirconium
[4-(η⁵-Indenyl)-4,6,6-trimethyl-(2-ethyl)-η⁵-tetrahydropentalen]-dichlorozirconium
[4-(η⁵-Indenyl)-4,6,6-trimethyl-(2-isopropyl)-η⁵-tetrahydropentalen]-dichlorozirconium
[4-(η⁵-Indenyl)-4,6,6-trimethyl-(2-benzyl)-η⁵-tetrahydropentalen]-dichlorozirconium
[4-(η⁵-indenyl)-4,6,6-trimethyl-(2-trimethylsilyl)-η⁵-tetrahydropentalen]-dichlorozirconium
[4-(η⁵-2-Methylindenyl)- 2,4,6,6-tetramethyl-η⁵-tetrahydropentalen]-dichlorozirconium
[4-(η⁵-2-Methylindenyl)- 2,4,6,6-tetramethyl-η⁵-tetrahydropentalen]-dichlorotitan
[4-(η⁵-2-Methylindenyl)- 2,4,6,6-tetramethyl-η⁵-tetrahydropentalen]-dichlorohafnium
[4-(η⁵-2-Methylindenyl)- 2,4,6,6-tetramethyl-η⁵-tetrahydropentalen]-bis-diethylamino-zirconium
[4-(η⁵-2-Methylindenyl)-2,4,6,6-tetramethyl-η⁵-tetrahydropentalen]-bis-dimethylamino-zirconium
[4-(η⁵-2-Methylindenyl)-4,6,6-trimethyl-(2-ethyl)-η⁵-tetrahydropentalen]-dichlorozirconium
[4-(η⁵-2-Methylindenyl)-4,6,6-trimethyl-(2-isopropyl)-η⁵-tetrahydropentalen]-dichlorozirconium
[4-(η⁵-2-Methylindenyl)-4,6,6-trimethyl-(2-benzyl)-η⁵-tetrahydropentalen]-dichlorozirconium
[4-(η⁵-2-Methylindenyl)-4,6,6-trimethyl-(2-trimethylsilyl)-η⁵-tetrahydropentalen]-dichlorozirconium
[4-(η⁵-Benzoindenyl)- 2,4,6,6-tetramethyl -η⁵-tetrahydropentalen]-dichlorozirconium
[4-(η⁵-Benzoindenyl)- 2,4,6,6-tetramethyl-η⁵-tetrahydropentalen]-dichlorotitan
[4-(η⁵-Benzoindenyl)- 2,4,6,6-tetramethyl-η⁵-tetrahydropentalen]-dichlorohafnium
[4-(η⁵-Benzoindenyl)- 2,4,6,6-tetramethyl-η⁵-tetrahydropentalen]-bis-diethylaminozirconium
[4-(η⁵-Benzoindenyl)-2,4,6,6-tetramethyl-η⁵-tetrahydropentalen]-bis-dimethylaminozirconium
[4-(η⁵-Benzoindenyl)-4,6,6-trimethyl-(2-ethyl)-η⁵-tetrahydropentalen]-dichlorozirconium
[4-(η⁵-Benzoindenyl)-4,6,6-trimethyl-(2-isopropyl)-η⁵-tetrahydropentalen]-dichlorozirconium
[4-(η⁵-Benzoindenyl)-4,6,6-trimethyl-(2-benzyl)-η⁵-tetrahydropentalen]-dichlorozirconium
[4-(η⁵-Benzoindenyl)-4,6,6-trimethyl-(2-trimethylsilyl)-η⁵-tetrahydropentalen]-dichlorozirconium
[4-(η⁵-Cyclopentadienyl)-2,4,6,6-tetramethyl-η⁵-tetrahydropentalen]-dichlorozironium
[4-(η⁵-Cyclopentadienyl)-2,4,6,6-tetramethyl-η⁵-tetrahydropentalen]-dichlorotitan
[4-(η⁵-Cyclopentadienyl)-2,4,6,6-tetramethyl-η⁵-tetrahydropentalen]-dichlorohafnium
[4-(η⁵-Cyclopentadienyl)-2,4,6,6-tetramethyl-η⁵-tetrahydropentalen]-bis-diethylamino-zirconium
[4-(η⁵-Cyclopentadienyl)-2,4,6,6-tetramethyl-η⁵-tetrahydropentalen]-bis-dimethylamino-zirconium
[4-(η⁵-Cyclopentadienyl)-4,6,6-trimethyl-(2-ethyl)-η⁵-tetrahydropentalen]-dichlorozirconium
[4-(η⁵-Cyclopentadienyl)-4,6,6-trimethyl-(2-isopropyl)-η⁵-tetrahydropentalen]-dichlorozirconium
[4-(η⁵-Cyclopentadienyl)-4,6,6-trimethyl-(2-benzyl)-η⁵-tetrahydropentalen]-dichlorozirconium
[4-(η⁵-Cyclopentadienyl)-4,6,6-trimethyl-(2-trimethylsiIyl)-η⁵-tetrahydropentalen]-dichlorozirconium
[4-(η⁵-Fluorenyl)-2,4-dimethyl-6-phenyl-(η⁵-4,5-tefrahydropentalen]-dichlorozirconium
[4-(η⁵-Fluorenyl)-2-ethyl-4-methyl-6-phenyl-(η⁵-4,5-fefrahydropentalen]-dichlorozirconium
[4-(η⁵-Fluorenyl)-2-isopropyl-4-methyl-6-phenyl-(η⁵-4,5-tetrahydropentalen]-dichlorozirconium
[4-(η⁵-Fluorenyl)-(2-tert-butyl)-4-methyl-6-phenyl-(η⁵-4,5-tetrahydropentalen]-dichlorozirconium
[4-(η⁵-Fluorenyl)-2-benzyl-4-methyl-6-phenyl-(η⁵-4,5-tetrahydropentalen]-dichlorozirconium
[4-(η⁵-Fluorenyl)-2-trimethylsilyl-4-methyl-6-phenyl-(η⁵-4,5-tetrahydropentalen]-dichlorozirconium
[4-(η⁵-Fluorenyl)-2,4-dimethyl-6-o-anisyl-(η⁵-4,5-tetrahydropentalen]-dichlorozirconium
[4-(η⁵-Fluorenyl)-2-ethyl-4-methyl-6-o-anisyl -(η⁵-4,5-tetrahydropentalen]-dichlorozirconium
[4-(η⁵-Fluorenyl)-2-isopropyl-4-methyl-6-o-anisyl -(η⁵-4,5-tetrahydropentalen]-dichlorozirconium
[4-(η⁵-Fluorenyl)-(2-tert-butyl)-4-methyl-6-o-anisyl -(η⁵-4,5-tetrahydropentalen]-dichlorozirconium
[4-(η⁵-Fluorenyl)-2-benzyl-4-methyl-6-o-anisyl -(η⁵-4,5-tetrahydropentalen]-dichlorozirconium
[4-(η⁵-Fluorenyl)-2-trimethylsilyl-4-methyl-6-o-anisyl -(η⁵-4,5-tetrahydropentalen]-dichlorozirconium
[4-(η⁵-Fluorenyl)-2-methyl-4,6-diphenyl-(η⁵-4,5-tetrahydropentalen]-dichlorozirconium
[4-(η⁵-Fluorenyl)-2-ethyl-4,6-diphenyl-(η⁵-4,5-tetrahydropentalen]-dichlorozirconium
[4-(η⁵-Fluorenyl)-2-isopropyl-4,6-diphenyl-(η⁵-4,5-tetrahydropentalen]-dichlorozirconium
[4-(η⁵-Fluorenyl)-(2-tert-butyl)-4,6-diphenyl-(η⁵-4,5-tetrahydropentalen]-dichlorozirconium
[4-(η⁵-Fluorenyl)-2-benzyl-4,6-diphenyl-(η⁵-4,5-tetrahydropentalen)-dichlorozirconium
[4-(η⁵-Fluorenyl)-2-trimethylsilyl-4,6-diphenyl-(η⁵-4,5-tetrahydropentalen]-dichlorozirconium
[4-(η⁵-Fluorenyl)-2,4-dimethyl-6-p-tolyl-(η⁵-4,5-tetrahydropentalen]-dichlorozirconium
[4-(η⁵-Fluorenyl)-2-ethyl-4-methyl-6-p-tolyl-(η⁵-4,5-tetrahydropentalen]-dichlorozirconium
[4-(η⁵-Fluorenyl)-2-isopropyl-4-methyl-6-p-tolyl-(η⁵-4,5-tetrahydropentalen]-dichlorozirconium
[4-(η⁵-Fluorenyl)-(2-tert-butyl)-4-methyl-6-p-tolyl-(η⁵-4,5-tetrahydropentalen]-dichlorozirconium
[4-(η⁵-Fluorenyl)-2-benzyl-4-methyl-6-p-tolyl-(η⁵-4,5-tetrahydropentalen]-dichlorozirconium
[4-(η⁵-Fluorenyl)-2-trimethylsilyl-4-methyl-6-p-tolyl-(η⁵-4,5-tetrahydropentalen]-dichlorozirconium
[4-(η⁵-Fluorenyl)-2,4-dimethyl-6-naphthyl-(η⁵-4,5-tetrahydropentalen]-dichlorozirconium
[4-(η⁵-Fluorenyl)-2-ethyl-4-methyl-6-naphthyl-(η⁵-4,5-tetrahydropentalen]-dichlorozirconium
[4-(η⁵-Fluorenyl)-2-isopropyl-4-methyl-6-naphthyl-(η⁵-4,5-tetrahydropentalen]-dichlorozirconium
[4-(η⁵-Fluorenyl)-(2-tert-butyl)-4-methyl-6-naphthyl-(η⁵-4,5-tetrahydropentalen]-dichlorozirconium
[4-(η⁵-Fluorenyl)-2-benzyl-4-methyl-6-naphthyl-(η⁵-4,5-tetrahydropentalen]-dichlorozirconium
[4-(η⁵-Fluorenyl)-2-trimethylsilyl-4-methyl-6-naphthyl-(η⁵-4,5-tetrahydropentalen]-dichlorozirconium
[4-(η⁵-Fluorenyl)-2,4-dimethyl-6-phenyl-(η⁵-4,5-tetrahydropentalen]-dichlorotitan
[4-(η⁵-Fluorenyl)-2,4-dimethyl-6-phenyl-(η⁵-4,5-tetrahydropentalen]-dichlorohafnium
[4-(η⁵-Fluorenyl)-2,4-dimethyl-6-phenyl-(η⁵-4,5-tefrahydropentalen]-bis-diethylamino-zirconium
[4-(η⁵-Fluorenyl)-2,4-dimethyl-6-phenyl-(η⁵-4,5-tetrahydropentalen]-bis-dimethylamino-zirconium

Die Benennung der voranstehend genannten erfindungsgemäßen Verbindungen soll anhand der Verbindung [4-(η⁵-3'-Isopropyl-cyclopentadienyl)-4,6,6-trimethyl-(η⁵-4,5-tetrahydropentalen)]-dichlorozirconium veranschaulicht werden.

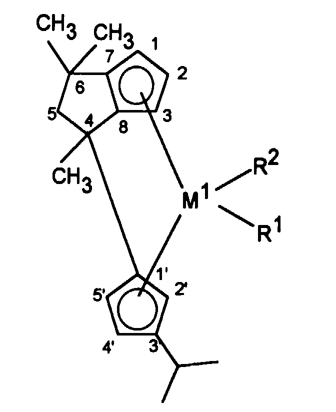

Die Herstellung der erfindungsgemäßen Metallocene soll durch das nachfolgende Reaktionsschema anhand von Metallocenen der Formel VI veranschaulicht werden. Dabei bedeutet M⁴ ein Metall der Hauptgruppe Ia, IIa oder IIIa des Periodensystems der Elemente, Hal ist ein Halogenatom, die Reste R³-R¹¹, R¹³ und R¹⁴ haben die gleiche Bedeutung wie in Formel I und R¹² ist Wasserstoff.

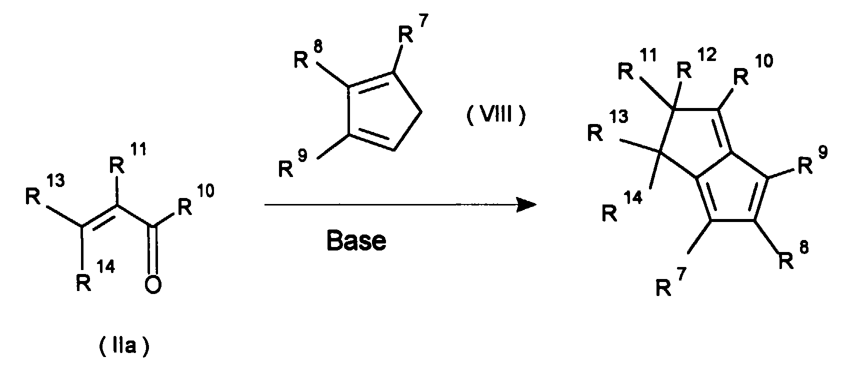

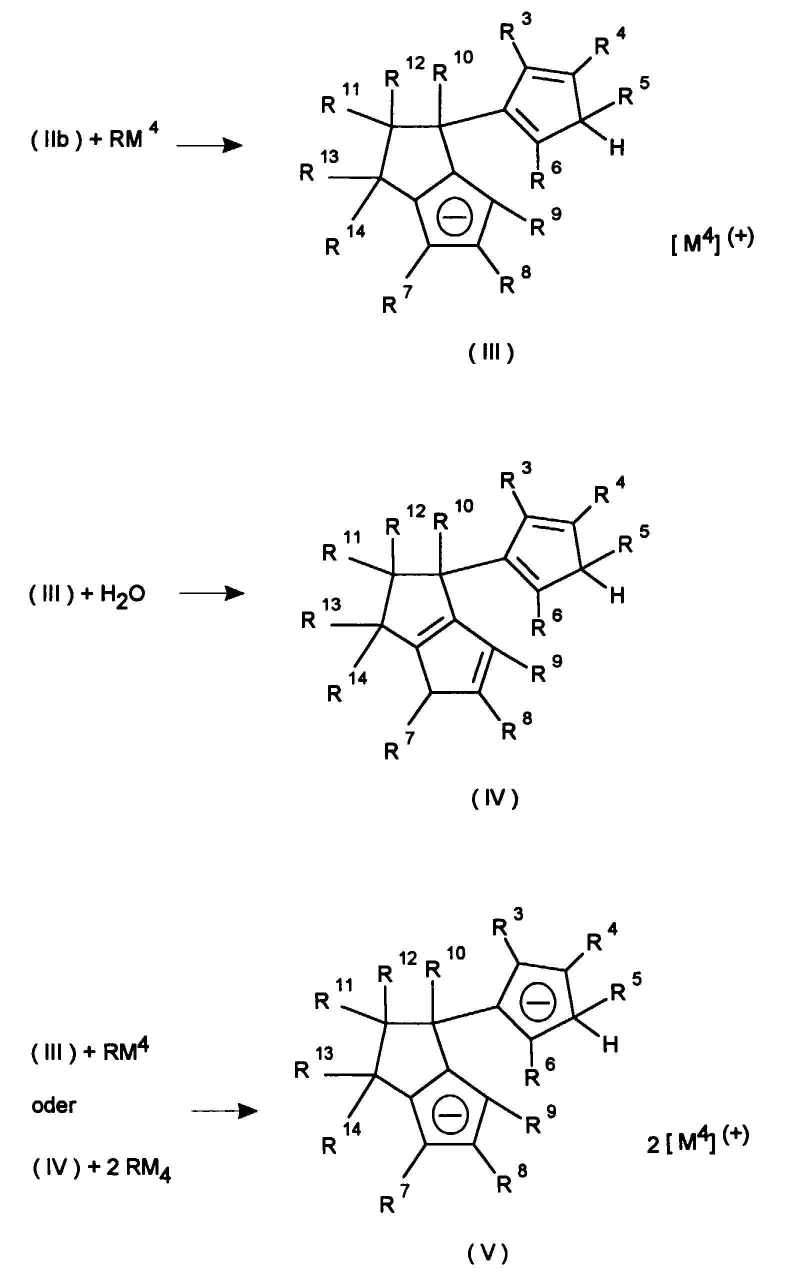

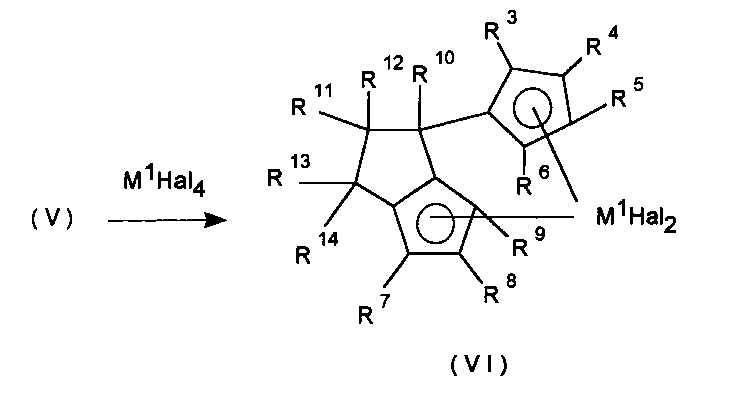

Die Verbindungen der Formel IIb können aus α,β-ungesättigten Ketonen (Chem. Ber. 123, 549 (1990), J. Org. Chem. 54, 4981 (1989)) nach literaturbekannten Methoden hergestellt werden.

Die Umsetzung der Verbindung der Formel IIb zu dem Ligandsystem III erfolgt durch Umsetzung mit einer Verbindung RM⁴, die eine metallorganische Verbindung (z.B. Cyclopentadienyllithium, Indenyllithium, Fluorenyllithium) oder ein Grignardreagenz (z.B. Cyclopentadienyl MgHal, Indenyl MgHal, Fluorenyl MgHal) sein kann.

Die Salze der Formel III können direkt zu den entsprechenden Dianion-Verbindungen der Formel V durch Deprotonierung mit beispielsweise Butyllithium umgesetzt werden. Die Hydrolyse von Verbindung III führt zur Bildung der Biscyclopentadien-Verbindung IV, welche als Konstitutionsisomerengemisch anfällt und chromatographisch gereinigt werden kann. Durch zweifache Deprotonierung von IV mit beispielsweise Butyllithium wird die Dianion-Verbindung der Formel V gebildet, die mit M¹Hal₄ zu dem Metallocen der Formel VI umgesetzt wird.

Metallocene der Formel VI können mit Organometallverbindungen wie Grignard-Reagenzien oder Kohlenwasserstoff-Lithium-Reagenzien zu Metallocenen der Formel I umgesetzt werden, in denen R¹ und R² ungleich Halogen sind. Die Umsetzung zu den verbrückten Metallocenen der Formel VI sowie die Isolierung der gewünschten Komplexe ist im Prinzip bekannt. Hierzu wird das Dianion der Formel V in einem inerten Lösungsmittel mit dem entsprechenden Metallhalogenid wie z.B. Zirkoniumtetrachlorid umgesetzt. Die Metallocene der Formel VI können auch direkt aus den Pentalenen der Formel II ohne Isolierung der Zwischenstufen synthetisiert werden.

Geeignete Lösungsmittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Eine weitere Möglichkeit zur Darstellung der erfindungsgemäßen Metallocenverbindungen besteht in der Reaktion des Ligandvorläufers VII mit dem Cyclopentadien VIII, welche beide jeweils nach literaturbekannten Vorschriften hergestellt werden können. Die Verbindungen IX können nach einer in der Literatur bekannten Vorschrift thermisch zu den Ligandvorläufern X cyclisiert werden (Chem. Ber. 120, 1611 (1987)). Die Umsetzung von X zu XI erfolgt mit einer organometallischen Verbindung (wie z.B. Cyclopentadienyllithium, Indenyllithium, Fluorenyllithium) oder Grignardreagenzien.

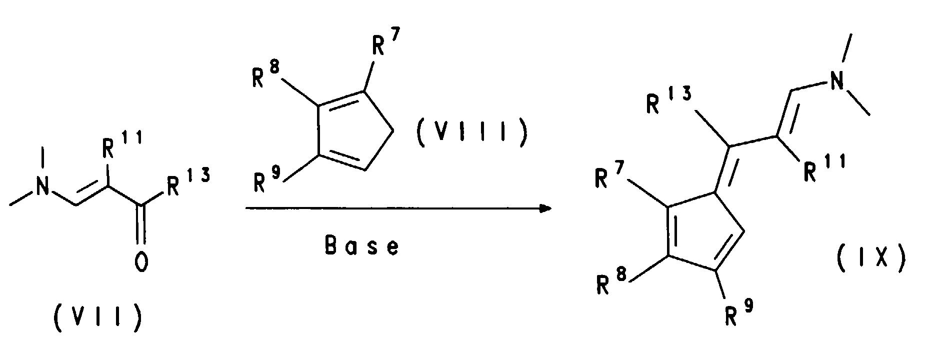

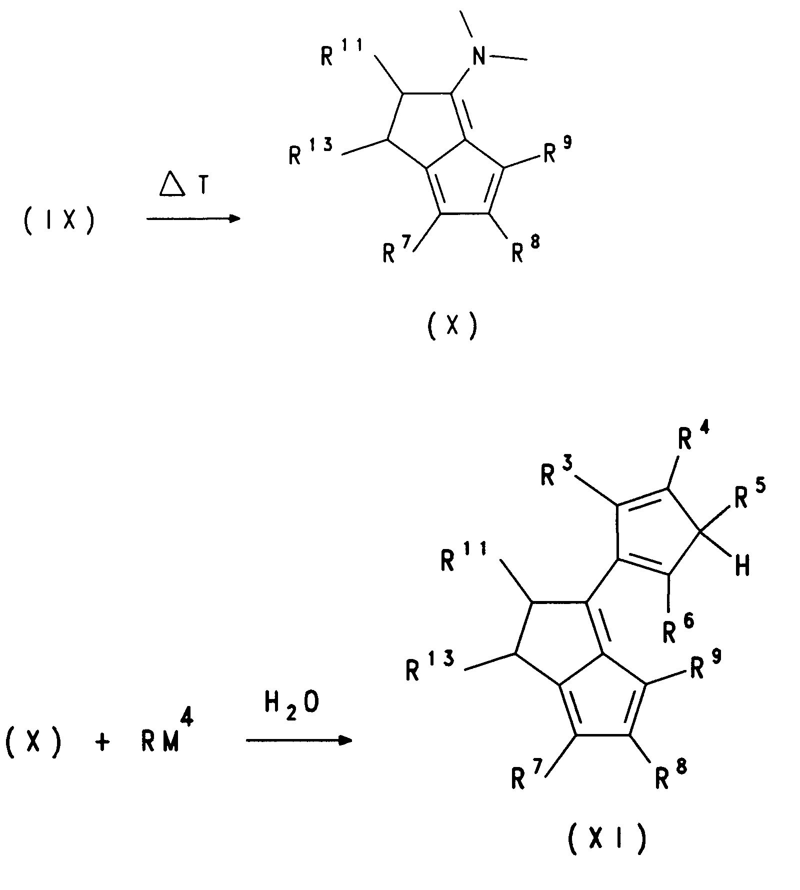

Die Dianionverbindung der Formel Va kann direkt durch Umsetzung von X mit einem metallorganischen Reagenz erhalten werden (wie z.B. Phenyllithium, Methyllithium, n-Butyllithium oder Grignardreagenzien). Die Hydrolyse von Va mit Wasser führt zur Generierung der Ligandvorläufer IV.

Die Umsetzung zu den verbrückten Metallocenen der Formel VIa sowie die Isolierung der gewünschten Komplexe ist im Prinzip bekannt. Hierzu wird das Dianion der Formel Va in einem inerten Lösungsmittel mit dem entsprechenden Metallhalogenid wie z. B. Zirkoniumtetrachlorid umgesetzt. Die Metallocene der Formel VIa können auch direkt aus den Fulvenen der Struktur X ohne Isolierung der Zwischenstufen synthetisiert werden.

Geeignete Lösungsmittel sind aliphatische oder aromatische Lösemittel, wie beispielsweise Hexan oder Toluol, etherische Lösungsmittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

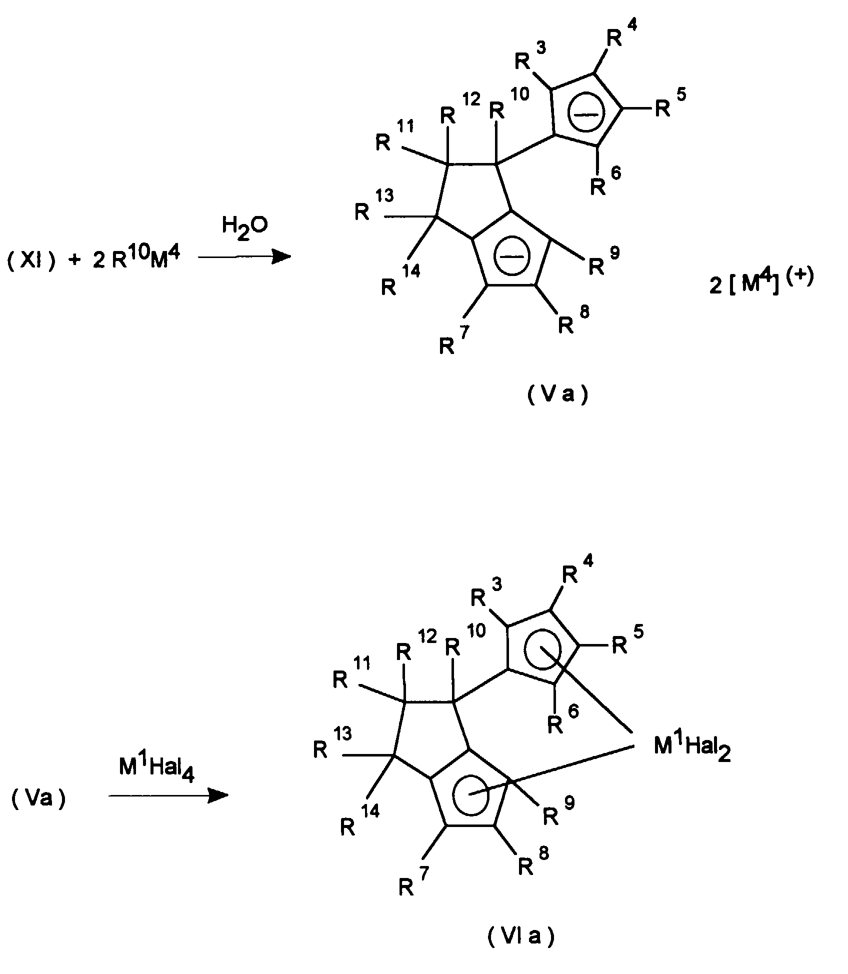

Biscyclopentadienyl-Verbindungen der Formel IV, bei welchen mindestens einer der Reste R³ bis R⁶ sowie mindestens einer der Reste R⁷ bis R⁹ Wasserstoff ist, und mindestens einer der Reste R³ bis R⁹ von Wasserstoff verschieden ist, können durch literaturbekannte Methoden zu den Fulvenen der Formel IVb bzw. IVc umgesetzt werden. Dies soll durch das nachfolgende Reaktionsschema veanschaulicht werden, wobei R¹⁶, R¹⁷, R¹⁹ und R²⁰ gleich oder verschieden sind und wie R¹⁰ definiert sind.

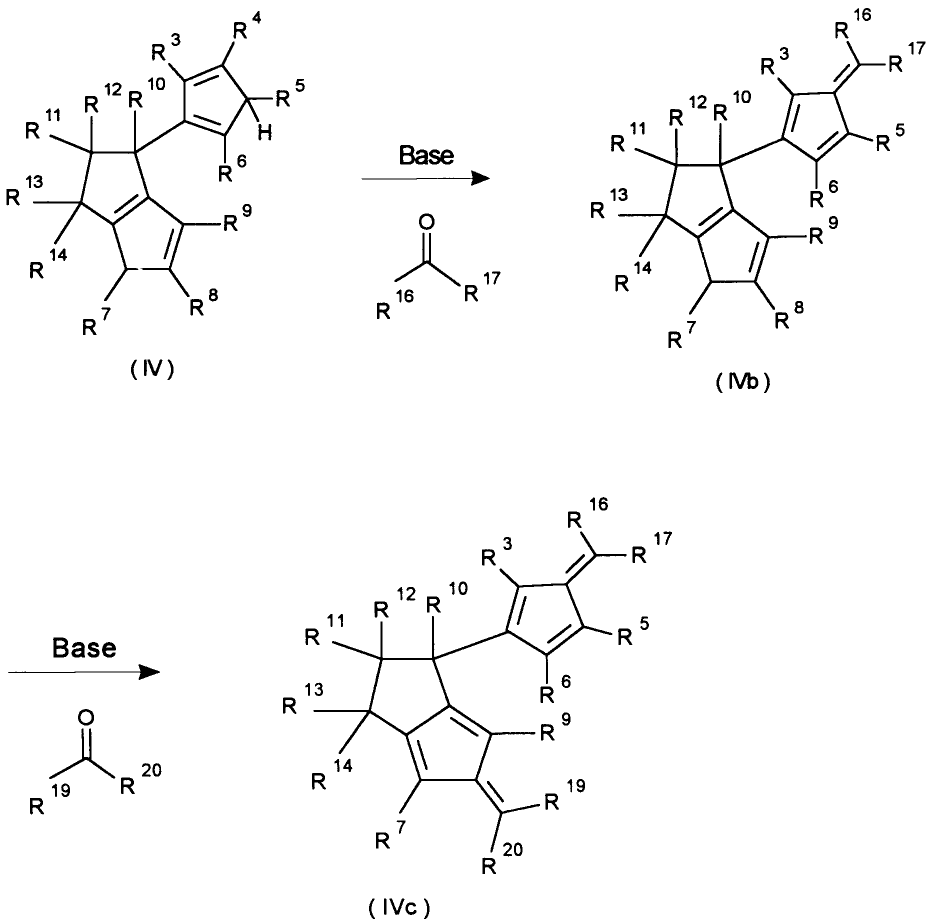

Durch Umsetzung des Fulvens IVb mit metallorganischen Verbindungen der Formel R¹⁸M⁵ (wobei R¹⁶, R¹⁷, R¹⁸, R¹⁹ und R²⁰ gleich oder verschieden sind und wie R¹⁰ definiert sind; M⁵ wie M⁴ definiert ist) führt zur Bildung der Monoanion-Verbindung III. Die Verwendung von zwei Äquivalenten R¹⁸M⁵ führt direkt zur Bildung der Dianion-Verbindung Vb.

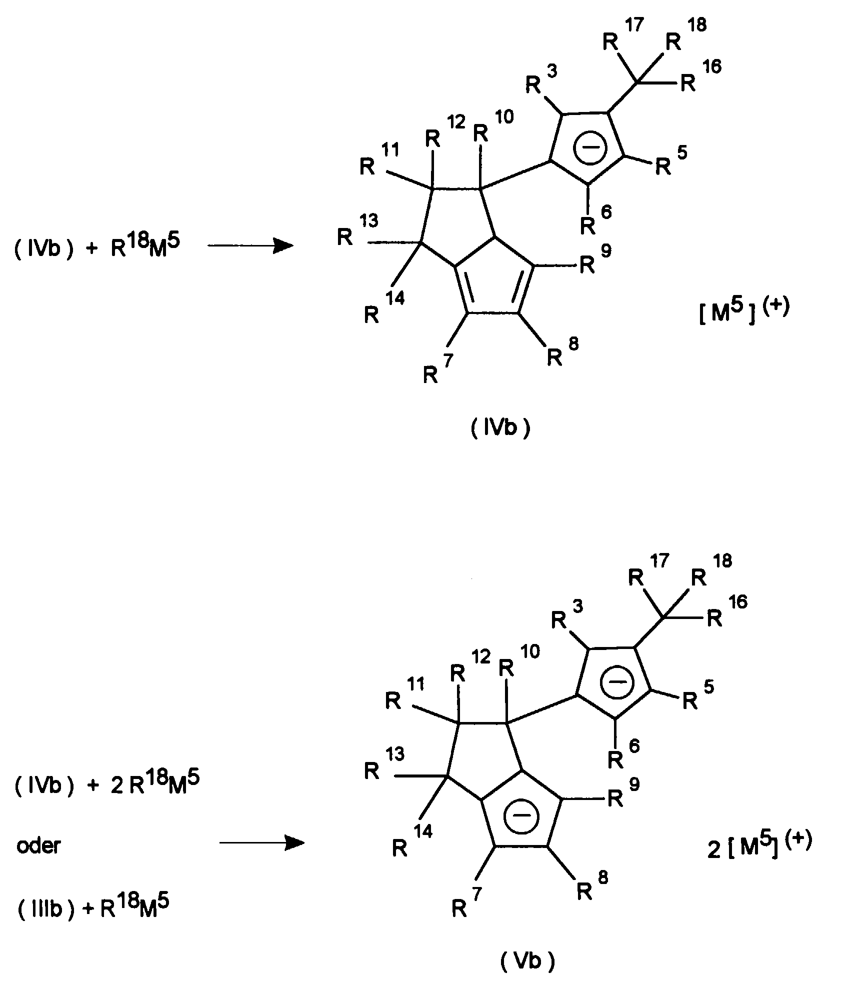

Die Umsetzung des Fulvens IVc führt entsprechend der Umsetzung von IVa zur Bildung der Dianionverbindung Vc.

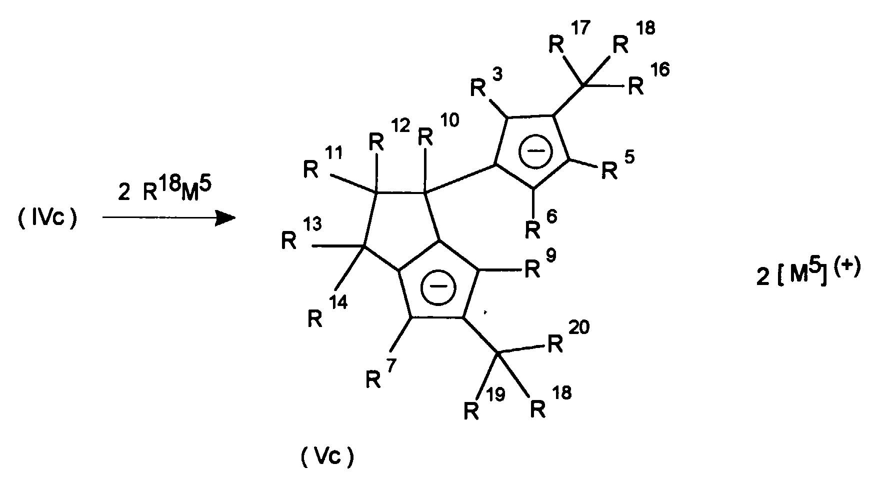

Die Biscyclopentadienyl-Anionen der Formel V, können mit Verbindungen R²¹ₚM⁶X umgesetzt werden, worin
- M⁶: ein Element der III.-V. Hauptgruppe ist,
- X: eine Abgangsgruppe wie Halogen, Tosylat, Triflat ist,
- R²¹: wie R¹⁰ definiert ist, und
- p: eine ganze Zahl von 1 bis 5 ist.

Dies soll durch das nachfolgende Reaktionsschema veranschaulicht werden:

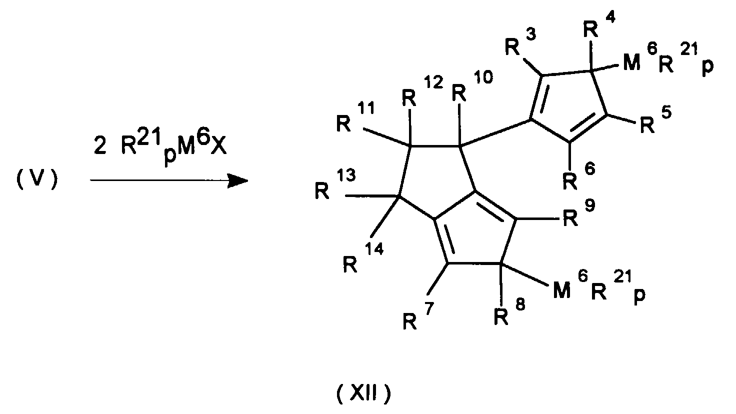

Verbindungen der Formel XII, bei welchen mindestens einer der Reste R³ bis R⁶ sowie mindestens einer der Reste R⁷ bis R⁹ Wasserstoff ist, können zu den erfindungsgemäßen Metallocenen umgesetzt werden.
R¹² ist in den Verbindungen der Formeln IIb, III, IV, V, VI, X, XI, Va, VIa, IVb, IVc, Vb, Vc und XII gleich Wasserstoff. R¹⁴ ist in den Verbindungen der Formeln X, XI, Va und VIa gleich Wasserstoff. Die Salze der Formel IIIb können direkt zu den entsprechenden Dianion-Verbindungen der Formel Va durch Deprotonierung mit beispielsweise Butyllithium umgesetzt werden. Die Umsetzung zu den Metallocenen der Formel I erfolgt entsprechend der Reaktion von V nach VI.

Die erfindungsgemäßen Metallocene sind hochaktive Katalysatorkomponenten für die Olefinpolymerisation. Je nach Substitutionsmuster der Liganden können die Metallocene als Isomerengemisch anfallen. Die Metallocene werden bevorzugt isomerenrein eingesetzt. Die Verwendung des Racemats ist in den meisten Fällen ausreichend.

Verwendet werden kann aber auch das reine Enantiomere in der (+)- oder (-)-Form. Mit den reinen Enantiomeren ist ein optisch aktives Polymer herstellbar. Getrennt werden sollten jedoch die konfigurationsisomeren Formen der Metallocene, da das polymerisationsaktive Zentrum (das Metallatom) in diesen Verbindungen ein Polymer mit anderen Eigenschaften erzeugt. Für bestimmte Anwendungen, beispielsweise weiche Formkörper, kann dies durchaus wünschenswert sein.

Die vorliegende Erfindung betrifft außerdem ein Verfahren zur Herstellung eines Polyolefins durch Polymerisation mindestens eines Olefins in Gegenwart eines Katalysators der mindestens einen Cokatalysator und mindestens eine stereorigide Metallocenverbindung der Formel I enthält. Unter dem Begriff Polymerisation wird eine Homopolymerisation wie auch eine Copolymerisation verstanden.

Bevorzugt werden in dem erfindungsgemäßen Verfahren eines oder mehrere Olefine der Formel R^{a}-CH = CH-R^{b} polymerisiert, worin R^{a} und R^{b} gleich oder verschieden sind und ein Wasserstoffatom oder einen Kohlenwasserstoffrest mit 1 bis 20 C-Atomen, insbesondere 1 bis 10 C-Atomen, bedeuten, und R^{a} und R^{b} zusammen mit den sie verbindenen Atomen einen oder mehrere Ringe bilden können. Beispiele für solche Olefine sind 1-Olefine mit 2 bis 40, bevorzugt 2-10 C-Atomen, wie Ethylen, Propylen, 1-Buten, 1-Penten, 1-Hexen, 4-Methyl-1-penten oder 1-Octen, Styrol, Diene wie 1,3-Butadien, Isopren, 1,4-Hexadien oder cyclische Olefine.
Bevorzugt werden in dem erfindungsgemäßen Verfahren Ethylen oder Propylen homopolymerisiert, oder Ethylen mit einem oder mehreren cyclischen Olefinen, wie Norbornen, und/oder einem oder mehreren acyclischen 1-Olefinen mit 3 bis 20 C-Atomen, wie Propylen, und/oder einem oder mehreren Dienen mit 4 bis 20 C-Atomen, wie 1,3-Butadien oder 1,4-Hexadien, copolymerisiert. Beispiele solcher Copolymere sind Ethylen/Norbornen-Copolymere, Ethylen/Propylen-Copolymere und Ethylen/Propylen/ 1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasen- und Lösungspolymerisation.

Bevorzugt enthält der in dem erfindungsgemäßen Verfahren eingesetzte Katalysator eine Metallocenverbindung. Es können auch Mischungen zweier oder mehrerer Metallocenverbindungen eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus sollte der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R²²ₓNH_{4-X}BR²³₄, R²²ₓPH₄₋ₓBR²³₄, R²²₃CBR²³₄ oder BR²³₃, worin x eine Zahl von 1 bis 4, bevorzugt 3, bedeutet, die Reste R²² gleich oder verschieden, bevorzugt gleich sind, und C₁-C₁₀-Alkyl oder C₆-C₁₈-Aryl sind, oder zwei Reste R²² zusammen mit dem sie verbindenen Atomen einen Ring bilden, und die Reste R²³ gleich oder verschieden, bevorzugt gleich sind, und C₆-C₁₈-Aryl sind, das durch Alkyl, Haloalkyl oder Fluor substituiert sein kann. Insbesondere steht R²² für Ethyl, Propyl, Butyl oder Phenyl und R²³ für Phenyl, Pentafluorphenyl, 3,5-Bistrifluormethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel XIIIa für den linearen Typ und/oder der Formel XIIIb für den cyclischen Typ verwendet, 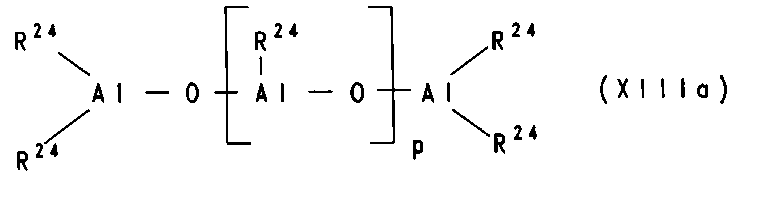 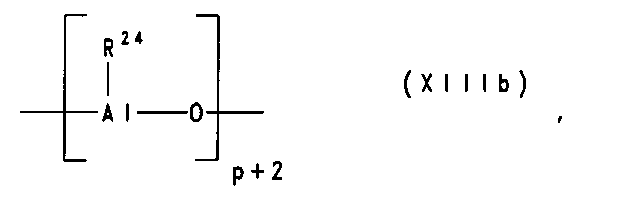 wobei in den Formeln XIIIa und XIIIb die Reste R²⁴ gleich oder verschieden sind und Wasserstoff oder eine C₁-C₂₀-Kohlenwasserstoffgruppe wie eine C₁-C₁₈-Alkylgrupppe, eine C₆-C₁₈-Arylgruppe oder Benzyl bedeuten, und p eine ganze Zahl von 2 bis 50, bevorzugt 10 bis 35 bedeutet.

Bevorzugt sind die Reste R²⁴ gleich und bedeuten Wasserstoff, Methyl, Isobutyl, Phenyl oder Benzyl, besonders bevorzugt Methyl.

Sind die Reste R²⁴ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R²⁴) enthalten sind.

Die Verfahren zur Herstellung der Aluminoxane sind bekannt. Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocenverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von 10⁻⁴ bis 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 100°C, vorzugsweise 0 bis 80°C.

Die Metallocenverbindung wird bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R²⁴ werden beispielsweise entsprechend der gewünschten Zusammensetzung zwei verschiedene Aluminiumtrialkyle mit Wasser umgesetzt.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem erfindungsgemäßen Verfahren kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung des geträgerten Cokatalysators kann beispielsweise wie in EP 578 838 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf.

Im Prinzip sind jedoch auch andere Reaktoren geeignet.

Im vorstehend beschriebenen Reaktor mit 16 dm³ Volumen werden 5 dm³ Decan unter Inertbedingungen vorgelegt. 0,5 dm³ (= 5,2 mol) Trimethylaluminium werden bei 25°C zugefügt. Danach werden 250 g Kieselgel SD 3216-30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 76,5 g Wasser wird in Portionen von 0,1 cm³ während 3,25 Stunden jeweils alle 15 Sekungen in den Reaktor gegeben. Der Druck, herrührend vom Argon und den entwickelten Gasen, wird durch ein Druckregelventil konstant bei 10 bar gehalten. Nachdem alles Wasser eingebracht worden ist, wird das Umpumpsystem abgeschaltet und das Rühren noch 5 Stunden bei 25°C fortgesetzt.

Der in dieser Weise hergestellte geträgerte Cokatalysator wird als eine 10 %ige Suspension in n-Decan eingesetzt. Der Aluminiumgehalt ist 1,06 mmol Al pro cm³ Suspension. Der isolierte Feststoff enthält 31 Gew.-% Aluminium, das Suspensionsmittel enthält 0,1 Gew.-% Aluminium.

Weitere Möglichkeiten der Herstellung eines geträgerten Cokatalysators sind in EP 578 838 beschrieben.

Danach wird das erfindungsgemäße Metallocen auf den geträgerten Cokatalysator aufgebracht, indem das gelöste Metallocen mit dem geträgerten Cokatalysator gerührt wird. Das Lösemittel wird entfernt und durch einen Kohlenwasserstoff ersetzt, in dem sowohl Cokatalysator als auch das Metallocen unlöslich sind.

Die Reaktion zu dem geträgerten Katalysatorsystem erfolgt bei einer Temperatur von -20 bis + 120°C, bevorzugt 0 bis 100°C, besonders bevorzugt bei 15 bis 40°C. Das Metallocen wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung des Metallocens in einem inerten Lösungsmittel wie Toluol, Hexan, Heptan, Dichlormethan oder mit dem feingemahlenen Feststoff des Metallocens zusammengebracht wird. Umgekehrt kann auch eine Lösung des Metallocens mit dem Feststoff des Cokatalysators umgesetzt werden.

Die Umsetzung erfolgt durch intensives Mischen, beispielsweise durch Verrühren bei einem molaren Al/M¹ -Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.
Im Laufe der Reaktionszeit zur Herstellung des geträgerten Katalysatorsystems treten insbesondere bei der Verwendung der erfindungsgemäßen Metallocene mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslishem Metallocen, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Vor der Zugabe des Katalysators, insbesondere des geträgerten Katalysatorsystems (enthaltend das erfindungsgemäße Metallocen und einen geträgerten Cokatalysator) kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhander Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden.

Werden inerte Lösemittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die in der vorliegenden Erfindung beschriebenen speziellen stereorigiden Metallocenverbindungen eignen sich zur Herstellung von Polyolefinen, insbesondere solchen mit reduzierter Kristallinität, erhöhter Schlagzähigkeit, erhöhter Transparenz, hoher Fließfähigkeit bei Verarbeitungstemperatur sowie reduziertem Schmelzpunkt.

Anwendungsschwerpunkte solcher Polyolefine sind Weichmacher- und Gleitmittelrezepturen, Schmelzkleberanwendungen, Beschichtungen, Abdichtungen, Isolierungen, Ausgießmassen oder Schalldämmungsmaterialien.

Durch Anwendung von Wasserstoff oder durch Erhöhung der Polymerisationstemperatur sind auch Polyolefine niedriger Molmasse, wie Wachse zugänglich, deren Härte oder Schmelzpunkt durch den Comonomergehalt variiert werden können.

Umgekehrt lassen sich durch Wahl der Polymerisationsbedingungen auch hochmolekulare Polyolefine herstellen, welche als thermoplastische Werkstoffe geeignet sind. Diese sind insbesondere zur Herstellung von Formkörpern wie Folien, Platten oder Großhohlkörpern (z.B. Rohre) geeignet.

Durch Wahl des Polymerisations-Verfahrens und der Comonomerart(en), sowie Comonomermenge(n) lassen sich Olefincopolymere mit elastomeren Eigenschaften wie z.B. Ethylen/Propylen/1,4-Hexadien-Terpolymere herstellen.

Die nachfolgenden Beispiele dienen zur näheren Erläuterung der Erfindung.

Herstellung und Handhabung organometallischer Verbindungen erfolgten unter Ausschluß von Luft und Feuchtigkeit unter Argon-Schutzgas (Schlenk-Technik). Alle benötigten Lösungsmittel wurden vor Gebrauch durch mehrstündiges Sieden über einem geeigneten Trockenmittel und anschließende Destillation unter Argon absolutiert.

Die Herstellung der als Ausgangsverbindungen eingesetzten α,β-ungesättigten Ketone und Fulvene erfolgte nach literaturbekannten Methoden (Synlett 771 (1991); J. Chem. Soc., Commun. 1694 (1986); Chem. Ber. 116, 119 (1983); Tetrahedron Lett. 23; 1447 (1982)), Cyclopentadien und Methylcyclopentadien wurden durch Cracken der Dimeren gewonnen und bei -35°C gelagert. Die hergestellten Verbindungen wurden mit ¹H-NMR analysiert.

### 1. 4-Cyclopentadienyl-4,6,6-trimethyl-4,5-tetrahydropentalen

Die Darstellung erfolgte nach einer literaturbekannten Methode (*Makromol. Chem*, **183** (1982), 359) durch Umsetzung von 6,6-Dimethylfulven mit Natriumcyclopentadienid.

### 2. [4-(η⁵-Cyclopentadienyl)-4,6,6-trimethyl-(η⁵-4,5-tetrahydropentalen)]-dichlorozirconium

Zu einer Lösung von 10 g (47.2 mmol) 4-Cyclopentadienyl-4,6,6-trimethyl-4,5-tetrahydropentalen in 50 ml Toluol werden 59.1 ml (94.6 mmol) einer 1.6 molaren Methyllithiumlösung in Hexan getropft. Die Lösung wird für weitere 3 Stunden gerührt. Die entstandene Suspension wird auf -78°C abgekühlt und anschließend portionsweise mit 11 g (47.2 mmol) Zirkoniumtetrachlorid versetzt. Die Suspension wird 24 Stunden gerührt und anschließend über eine G3-Fritte filtriert. Der Rückstand wird mit 100 ml Toluol nachextrahiert und die vereinigten toluolischen Filtrate im Vakuum vom Lösungsmittel befreit. Man erhält 7.4 g (42%) [4-(η⁵-Cyclopentadienyl)-4,6,6-trimethyl-(η⁵-4,5-tetrahydropentalen)]-dichlorozirconium in Form eines gelben Pulvers.
¹H-NMR (200 MHz, CDCl₃): 7.2 - 5.9 (m, 7H, H-C(2*'*), H-C(3*'*), H-C(4*'*), H-C(5*'*), H-C(1), H-C(2), H-C(3)), 3.3 (d, 14, 1H, H-C(5)), 2.9 (d, 14, 1H, H-C(5)), 2.3 (s, 3H, CH₃), 1.8 (s, 3H, CH₃), 1.75 (s, 3H, CH₃).

### 3. 4-(3'-Isopropyliden-cyclopentadienyl)-4,6,6-trimethyl-4,5-tetrahydropentalen

Eine Lösung von 15 g (35 mmol) 4-Cyclopentadienyl-4,6,6-trimethyl-4,5-tetrahydropentalen und 2.64 g (45.5 mmol) Aceton in 150 ml Methanol wird bei 0°C tropfenweise mit 4.98 g (70 mmol) Pyrrolidin versetzt. Die Reaktionslösung wird 24 h bei 0°C nachgerührt und durch Zugabe von 4.2 g (70 mmol) Eisessig abgebrochen. Anschließend wird 3 mal mit je 70 ml Pentan extrahiert und die vereinigten Extrakte mit Natriumchlorid-Lösung gewaschen und über Magnesiumsulfat getrocknet. Nach Entfernen des Lösungsmittels im Vakuum erhält man 9.4 g (81 %) 4-(3*'*-Isopropyliden-cyclopentadienyl)-4,6,6-trimethyl-4,5-tetrahydropentalen.

### 4. 4-(3'-Isopropyl-cyclopentadienyl)-4,6,6-trimethyl-4,5-tetrahydropentalen

Zu einer Suspension von 4.5 g (118.5 mmol) Lithiumaluminumhydrid in 120 ml Diethylether wird bei Raumtemperatur eine Lösung von 10 g (39.4 mmol) 4-(3*'*-Isopropyliden-cyclopentadienyl)-4,6,6-trimethyl-4,5-tetrahydropentalen in 30 ml Diethylether getropft. Die Reaktionsmischung wird 1 Stunde bei Raumtemperatur gerührt und anschließend noch 3 weitere Stunden unter Rückfluß erhitzt. Nach beendeter Reaktion wird auf 0°C abgekühlt und mit Eiswasser hydrolysiert. Der entstandene Niederschlag wird abfiltriert und 3 mal mit je 20 ml Diethylether extrahiert. Die vereinigten etherischen Extrakte werden über Magnesiumsulfat getrocknet und das Lösungsmittel im Vakuum entfernt. Man erhält 9.5 g (94%) 4-(3*'*-Isopropyl-cyclopentadienyl)-4,6,6-trimethyl-4,5-tetrahydropentalen.

### 5. [4-(η⁵-3'-Isopropyl-cyclopentadienyl)-4,6,6-trimethyl-(η⁵-4,5-tetrahydropentalen)]-dichlorozirconium

Zu einer Lösung von 8 g (31.2 mmol) 4-(3*'*-Isopropyl-cyclopentadienyl)-4,6,6-trimethyl-4,5-tetrahydropentalen in 40 ml Toluol werden 39 ml (62.4 mmol) einer 1.6 molaren Methyllithiumlösung in Hexan getropft. Die Lösung wird für weitere 3 Stunden gerührt. Die entstandene Suspension wird auf -78°C abgekühlt und anschließend portionsweise mit 7.3 g (31.3 mmol) Zirkoniumtetrachlorid versetzt. Die Suspension wird 24 Stunden gerührt und anschließend über eine G3-Fritte filtriert. Der Rückstand wird mit 80 ml Toluol nachextrahiert und die vereinigten toluolischen Filtrate im Vakuum vom Lösungsmittel befreit. Man erhält 5.6 g (45%) [4-(η⁵-3*'*-Isopropylcyclopentadienyl)-4,6,6-trimethyl-(η⁵-4,5-tetrahydropentalen)]-dichlorozirconium in Form eines gelben Pulvers.
¹H-NMR (200 MHz, CDCl₃): 7.4 - 5.9 (m, 7H, H-C(2*'*), H-C(4*'*), H-C(5*'*), H-C(1), H-C(2), H-C(3)), 3.3 (d, 14, 1H, H-C(5)), 2.95 (d, 14, 1H, H-C(5)), 2.2 (s, 3H, CH₃), 2.05 (m, 1H, Me₂CH), 1.85 (s, 3H, CH₃), 1.75 (s, 3H, CH₃), 1.3 (d, 8, 6H, (CH₃)₂C).

### 6. 4-(3'-Trimethylsilyl-cyclopentadienyl)-4,6,6-trimethyl-4,5-tetrahydropentalen

Zu einer Lösung von 8,5 g (40 mmol) 4-Cyclopentadienyl-4,6,6-trimethyl-4,5-tetrahydropentalen in 100 ml THF werden bei 0°C 16 ml (35 mmol) einer 2.5-molaren Lösung von n-Buthyllithium in Hexan (2,5 molar) zugegeben. Die Reaktionslösung wird 2 h bei 0°C nachgerührt, dann erfolgt Zugabe von 6,3 ml (50 mmol) Trimethylsilylchlorid. Nach 2 h werden flüchtige Bestandteile im Ölpumpemvakuum abdestiliert, der Rückstand anschließend mit 70 ml Pentan extrahiert und filtriert. Das Filtrat wird im Vakuum getrocknet. Man erhält 10,8 g (38 mmol) 4-(3*'*-Trimethylsilyl-cyclopentadienyl)-4,6,6-trimethyl-4,5-tetrahydropentalen in Form eines gelblichen Öls.

### 7. [4-(η⁵-3'-Trimethylsilyl-cyclopentadienyl)-4,6,6-trimethyl-(η⁵-4,5-tetrahydropentalen)]-dichlorozirconium

Zu einer Lösung von 10,8 g (38 mmol) 4-(3*'*-Trimethylsilyl-cyclopentadienyl-4,6,6-trimethyl-4,5-tetrahydropentalen in 100 ml Toluol werden 30,5 ml (76 mmol) einer 2,5 molaren n-Buthyllithiumlösung in Hexan zugegeben. Die Lösung rührt für 3 Stunden bei 22°C und wird dann auf -78°C gekühlt. 8,85 g (38 mmol) Zirkoniumtetrachlorid werden anschließend portionsweise zugegeben. Die Suspension wird 24 Stunden bei RT gerührt und anschließend über eine G3-Fritte filtriert. Der Rückstand wird mit 100 ml Toluol nachextrahiert und die vereinigten toluolischen Filtrate im Vakuum vom Lösungsmittel befreit. Man erhält 6,3 g (38%) [4-(η⁵-3*'*-Trimethylsilyl-cyclopentadienyl)-4,6,6-trimethyl-(η⁵-4,5-tetrahydropentalen)]-dichlorozirconium als Isomerengemisch in Form eines gelblichen Pulvers.
¹H-NMR (200 MHz, CDCl₃): 6.9 - 5.3 (m, 6H, H-C(2*'*), H-C(4*'*), H-C(5*'*), H-C(1), H-C(2), H-C(3)), 2,85 (m, 14, 1H, H-C(5)), 2.45 (m, 14, 1H, H-C(5)), 2.3 (m, 3H, CH₃), 1.9 (m, 3H, CH₃), 1.35 (m, 6H, CH₃), 0.23 (s, CH₃-Si), 0.22 (s, CH₃-Si).

### Polymerisationsbeispiel A:

Es wurden 4,3 mg [4-(η⁵-Cyclopentadienyl)-4,6,6-trimethyl(η⁵-4,5-tetrahydropentalen)]-dichlorozirkonium (0,0120 mmol Zr) unter Argon und Rühren in 1,5 ml Toluol in einem Schlenkrohr gelöst. Dann wurde zur Aktivierung mit 3,5 ml MAO 30 %ig (16,59 mmol Al; Zr:Al = 1:3530) der Firma Witco versetzt und diese Lösung in 750 ml Exxsol 100/120 gegeben. Die Katalysatorlösung wurde in einen Autoklaven überführt, in dem für eine Stunde bei einer Temperatur von 70°C und einer Rührergeschwindigkeit von 750 upm mit einem Ethylen-Partialdruck von 4 bar polymerisiert wurde. Nach Ende der Reaktionszeit wurde das Ethen aus dem Reaktor abgelassen und das Polymerisationsgemisch mit wenig Ethanol gerührt. Es wurde dann aus dem Reaktor abgelassen und über Nacht mit einer 10 %igen ethanolischen Salzsäurelösung gerührt. Anschließend wurde mit gesättigter NaHCO₃-Lösung sowie zweimal mit etwa 100 cm³ Wasser gewaschen. Das abfiltrierte Polymer wurde bei 60°C bis zur Gewichtskonstanz im Vakuum getrocknet. Es wurden 34 g an Polyethylen erhalten.

### Polymerisationsbeispiel B:

Die Polymerisation und Aufarbeitung wurde wie in Polymerisationsbeispiel A beschrieben durchgeführt. Abweichend wurden jedoch 3,4 g [4-(3'-Isopropyl-η⁵-cyclopentadienyl)-4,6,6-trimethyl-(η⁵-4,5-tetrahydropentalen)]-dichlorozirkonium verwendet. Es wurden 71 g an Polyethylen erhalten.

## Patentansprüche

1. Stereorigide Metallocenverbindung der Formel I, 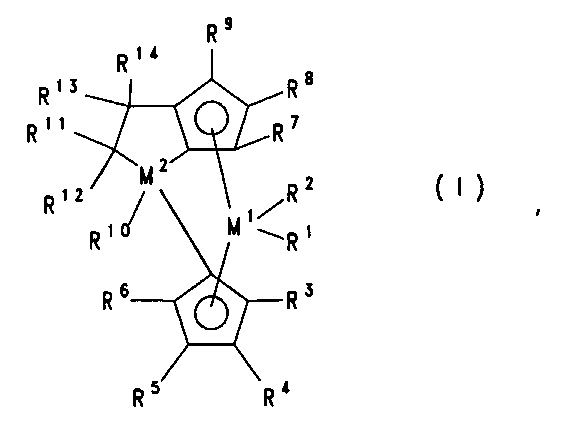 worin
M¹ ein Metall der Gruppe IIIb, IVb, Vb oder VIb des Periodensystems ist,
M² Kohlenstoff, Silizium oder Germanium ist,
R¹ und R² gleich oder verschieden sind und ein Wasserstoffatom, eine C₁-C₄₀-kohlenstoffhaltige Gruppe wie eine C₁-C₁₀-Alkyl-, eine C₁-C₁₀-Alkoxy, eine C₆-C₁₀-Aryl-, eine C₆-C₂₅-Aryloxy-, eine C₂-C₁₀-Alkenyl-, eine C₇-C₄₀-Arylalkyl- oder eine C₇-C₄₀-Arylalkenylgruppe, eine OH-Gruppe, ein Halogenatom oder NR¹⁵₂, worin R¹⁵ ein Halogenatom, eine C₁-C₁₀-Alkylgruppe oder eine C₆-C₁₀-Arylgruppe ist, bedeuten, oder R¹ und R² zusammen mit den sie verbindenden Atomen ein Ringsystem bilden,
R³, R⁴, R⁵, R⁶, R⁷, R⁸ und R⁹ gleich oder verschieden sind und ein Wasserstoffatom, ein Halogenatom, eine C₁-C₄₀-kohlenstoffhaltige Gruppe wie eine C₁-C₁₀-Alkylgruppe, die halogeniert sein kann, eine C₆-C₃₀-Arylgruppe, die halogeniert sein kann, eine C₆-C₂₀-Aryloxy-, eine C₂-C₁₂-Alkenyl-, eine C₇-C₄₀-Arylalkyl-, eine C₇-C₄₀-Alkylaryl-, oder eine C₈-C₄₀-Arylalkenylgruppe, einen -SiR¹⁵₃-, -NR¹⁵₂-, -SiOR¹⁵₃-, -SiSR¹⁵₃- oder -PR¹⁵₂-Rest bedeuten, worin R¹⁵ gleich oder verschieden ein Halogenatom, eine C₁-C₁₀-Alkylgruppe oder eine C₆-C₁₀-Arylgruppe sind oder ein Ringsystem bilden, oder zwei oder mehr benachbarte Reste R³, R⁴, R⁵, R⁶, R⁷, R⁸ und R⁹ zusammen mit den sie verbindenen Atomen ein Ringsystem bilden, welches bevorzugt 4 bis 40, besonders bevorzugt 6 bis 20 Kohlenstoffatome enthält,
R¹⁰, R¹³ und R¹⁴ gleich oder verschieden, bevorzugt gleich sind, und eine C₁-C₂₀-Alkylgruppe bedeuten,
R¹¹ und R¹² gleich oder verschieden sind, und ein Wasserstoffatom, eine C₁-C₄₀-kohlenstoffhaltige Gruppe wie eine C₁-C₂₀-Alkyl-, eine C₁-C₁₀-Alkoxy-, eine C₆-C₂₀-Aryl-, eine C₂-C₁₂-Alkenyl-, ein C₇-C₄₀-Arylalkyl-, eine C₇-C₄₀-Alkylaryl-, oder eine C₈-C₄₀-Arylalkenylgruppe bedeutet, die jeweils Reste wie ein Halogenatom, -NR¹⁵₃, -SR¹⁵₂, -SiR¹⁵₃ oder -OSiR¹⁵₃ tragen können, worin R¹⁵ ein Halogenatom, eine C₁-C₁₀ Alkylgruppe oder eine C₆-C₁₀ Arylgruppe ist,
und das Ligandsystem der Verbindung der Formel I verschieden ist von 4-[η⁵-3'-alkyl-cyclopentadienyl)4,6,6-trimethyl-(η⁵-2-alkyl-4,5-tetrahydropentalen)].

2. Stereorigide Metallocenverbindung der Formel I gemäß Anspruch 1, worin
M¹ ein Metall der Gruppe IVb des Periodensystems der Elemente wie Titan, Zirkonium oder Hafnium, insbesondere Zirkonium ist,
R¹ und R² gleich sind und eine C₁-C₄-Alkylgruppe oder ein Halogenatom wie Fluor, Chlor, Brom oder Jod, insbesondere Chlor bedeuten,
R³, R⁴, R⁵, R⁶, R⁷, R⁸ und R⁹ gleich oder verschieden sind und ein Wasserstoffatom, eine C₁-C₁₀-Alkylgruppe oder eine C₆-C₂₄-Arylgruppe sind, oder zwei oder mehr benachbarte Reste R³, R⁴, R⁵, R⁶, R⁷, R⁸ und R⁹ zusammen mit den sie verbindenden Atomen ein aromatisches oder aliphatisches kohlenstoffhaltiges Ringsystem mit 4 bis 20 Kohlenstoffatomen bilden,
R¹⁰, R¹³ und R¹⁴ eine C₁-C₁₀-Alkylgruppe, insbesondere C₁-C₆-Alkylgruppe sind,
M² Kohlenstoff ist,
R¹¹ und R¹² gleich oder verschieden sind, und R¹¹ ein Wasserstoffatom, eine C₁-C₁₀-kohlenstoffhaltige Gruppe, insbesondere eine C₁-C₄-Alkylgruppe oder eine C₆-C₁₀-Arylgruppe und R¹² ein Wasserstoffatom sind und
mindestens einer der Reste R³, R⁵, R⁶, R⁷ und R⁹ von Wasserstoff verschieden ist und/oder R⁸ Wasserstoff ist.

3. Stereorigide Metallocenverbindung der Formel I gemäß Anspruch 1 oder 2, worin
M¹ Zirkonium ist,
R¹ und R² gleich sind und ein Halogenatom, insbesondere Chlor bedeuten,
R³, R⁴, R⁵, R⁶, R⁷ und R⁹ gleich oder verschieden sind und ein Wasserstoffatom oder eine C₁-C₄-Alkylgruppe wie Methyl, Ethyl, Propyl, Isopropyl, Butyl oder Isobutyl oder eine C₆-C₁₄-Arylgruppe wie Phenyl oder Naphtyl bedeuten, oder R³ und R⁴ und/oder R⁵ und R⁶ zusammen mit den sie verbindenden Atomen ein aromatisches Kohlenwasserstoffringsystem mit 4 bis 20 Kohlenstoffatomen bilden, insbesondere einen Sechsring, der seinerseits substituiert sein kann,
R⁸ ein Wasserstoffatom ist,
M² ein Kohlenstoffatom ist,
R¹⁰, R¹³ und R¹⁴ eine C₁-C₆-Alkylgruppe, insbesondere Methyl, sind und
R¹¹ und R¹² gleich sind und ein Wasserstoffatom bedeuten.

4. Katalysator enthaltend a) mindestens eine stereorigide Metallocenverbindung der Formel I gemäß einem oder mehreren der Ansprüche 1 bis 3 und b) mindestens einen Cokatalysator.

5. Katalysator gemäß Anspruch 4, worin der Cokatalysator ein Aluminoxan ist.

6. Katalysator gemäß Anspruch 4 oder 5 zusätzlich enthaltend einen Träger.

7. Katalysator, erhältlich durch Kombination a) mindestens einer stereorigiden Metallocenverbindung der Formel I gemäß einem oder mehreren der Ansprüche 1 bis 3 und b) mindestens eines Cokatalysators.

8. Katalysator gemäß Anspruch 7, zusätzlich enthaltend einen Träger.

9. Verfahren zur Herstellung eines Polyolefins durch Polymerisation mindestens eines Olefins in Gegenwart eines Katalysators gemäß einem oder mehreren der Ansprüche 4 bis 8.

10. Verfahren gemäß Anspruch 9, wobei eines oder mehrere Olefine der Formel R^{a}-CH = CH-R^{b} polymerisiert werden, worin R^{a} und R^{b} gleich oder verschieden sind und ein Wasserstoffatom oder einen Kohlenwasserstoffrest mit 1 bis 20 C-Atomen bedeuten, und R^{a} und R^{b} zusammen mit den sie verbindenen Atomen einen oder mehrere Ringe bilden können.

11. Verwendung einer stereorigiden Metallocenverbindung gemäß einem oder mehreren der Ansprüche 1 bis 3, zur Olefinpolymerisation.

12. Polyolefin, erhältlich nach dem Verfahren gemäß Anspruch 10 oder 11.
